# EUROPEAN PATENT APPLICATION

(11) **EP 1 376 038 A1**
(43) Date of publication of application: **02.01.2004**
(21) Application number: 02405521.2
(22) Date of filing: 24.06.2002
(51) Int. Cl.: F28D 7/02, F28D 7/10, H01M 8/04

(54) **Heat exchanger**

(71) Applicant: ABB RESEARCH LTD., 8050 Zürich (CH); E.I. DU PONT DE NEMOURS AND COMPANY, Wilmington Delaware 19898 (US)
(72) Inventor: Chartouni, Daniel, 5400 Baden (CH); Killer, Eric, 5430 Wettingen (CH); Ohler, Christian, 5400 Baden (CH)
(74) Representative: ABB Patent Attorneys

(57) **Abstract**

The present invention provides a fluid-to-fluid through-the-wall heat exchanger for condensation of a vapour in a primary fluid stream, characterised in that the flow path (5) of the primary fluid stream is defined by an inner cylinder (1), an outer cylinder (2) arranged concentrically to and surrounding the inner cylinder, and a helical space holder (3) arranged between the inner and the outer cylinder. This condenser is easily coated such that all wetted materials are corrosion resistant. Compared to other condensers with identical ratings, this heat exchanger shows a smaller flow resistance, resulting in a smaller power demand of the blower or pumps. It is therefore particularly suitable for fuel cell systems where the condensed water has to be recirculated in the system and where purity demands are high and parasitic blower power should be minimal. The manufacturing of such a double envelope cylindrical heat exchanger is particularly simple and cost effective.

## Description

### FIELD OF THE INVENTION

The invention relates to the field of fluid-to-fluid through-the-wall heat exchangers for condensation of a vapour in a fluid stream. It also relates to the use of such a heat exchanger in fuel cell systems.

### BACKGROUND OF THE INVENTION

A fuel cell requires that a fuel such as hydrogen, hydrocarbon, metal or any other reducing agent is fed to the anode electrode on one side of an electrolyte barrier while oxygen or any other oxidising agent is supplied to the cathode electrode. The oxygen can be supplied from a pure oxygen source, but is most often supplied using ambient air as the source. Common practice is to supply the required flow rate of air to the cathode where a fraction of the oxygen in the air is used in the chemical reaction and the remaining gas is expelled as part of an exhaust gas.

Most fuel cells operate at temperatures above ambient and produce water vapour as a byproduct of the reaction in the above-mentioned exhaust gas. Depending on the application this water vapour needs to be condensed and recaptured in order to avoid the need for a periodical refill of the fuel cell system with fresh water. A common practice is to cool down the humid exhaust gas containing the water vapour by transferring heat to the ambient air in a heat exchanger and to re-introduce the condensed liquid water into the fuel cell system. This is a common procedure for stationary fuel cell systems. Commercially available condensers used for fuel cell systems are finned tube heat exchangers with stainless steel tubing expanded into copper or aluminum cooling fins. These exchangers are made of straight tubes connected by return loops and therefore result in a compact, basically rectangular design. In stationary fuel cell systems where compactness is of relatively low priority these condensers have several disadvantages.

First, the flow resistance of the primary side of the heat exchanger is high. The pump that delivers the feed air to the fuel cell and to the heat exchanger which follows in the same fluid path has to work against a higher pressure. This results in an increased power demand of the air pump and therefore in a lower total net power output of the fuel cell system.

Second, the cooling air at the secondary side is preferably blown in a direction perpendicular to the plane of the tubings, this cross-flow configuration results again in a relatively high flow resistance and further high parasitic power demand for the blowers and therefore a lower net total power output of the system.

Third, fuel cells, especially polymer membrane fuel cells are very sensitive to ionic impurities. If water is re-introduced into the fuel cell it should have the quality of deionised water with a minimum amount of metallic ions. Commercially available condensers have metallic heat-exchanger walls and deliver the water with a non-negligible amount of (metallic) impurities deteriorating the performance of the fuel cell. Because of their limited heat conductivity, it is disadvantageous to make the complete heat exchanger from non-metallic materials. It is also extremely costly to provide a thin coating of the inner walls of the tubes with non-metallic materials.

While the disadvantages of a conventional fluid-to-fluid finned tube heat exchanger have been discussed here with reference to the purpose of condensing water in the cathode exhaust stream of a fuel cell system, these disadvantages pertain also to other condensation applications where minimisation of pressure drop and high purity of the condensate are required.

In the patent application FR 2693540, a water-to-water heat exchanger with a cylindrical water reservoir surrounded by an annular space forming a helical flow path for the heating water is disclosed. The helical flow path is made up of a flat metallic strip oriented perpendicularly and being soldered or glued to the wall of the water reservoir and surrounding the latter in the form of a helix.

### DESCRIPTION OF THE INVENTION

It is therefore an object of the invention to create a heat exchanger of the fluid-to-fluid through-the-wall type for condensation of a vapour in a primary fluid stream which has low flow resistance for both the primary fluid stream and a cooling fluid. This object is achieved by a heat exchanger according to claim 1 and a use of such a heat exchanger according to claim 10. Preferred embodiments are evident from the dependent patent claims.

In the inventive heat exchanger, a helical primary flow path for a primary fluid consisting of or containing vapour to be condensed is defined by an outer cylinder forming a double wall cylinder together with the inner cylinder, and a helical space holder arranged in between the two cylinders. The space holder forms a wall guiding the primary fluid along the helical flow path and, at the same time, determines the radial distance between the two cylinders. An inner cylinder wall of the inner cylinder or an outer cylinder wall of the outer cylinder delimits a secondary flow path for the cooling fluid flowing along said cylinder wall. A cross-flow configuration with said cooling fluid flowing perpendicular to the cylinder axis and in between the windings of the helical primary flow path is avoided and the flow resistance in the secondary flow path is thus reduced.

In an advantageous embodiment, the cylinder delimiting the secondary flow path for the cooling fluid is the inner cylinder with an interior space accessible to a cooling fluid entering on one side and exiting on the opposite side of the cylinder. The inner cylinder defines by itself the secondary flow path and renders unnecessary the provision of a further delimiting means.

The cylinder walls in contact with the primary fluid and the space holder forming the helical flow path are preferably made of or coated with chemically resistant, non corrosive and preferably non-metallic materials in order to avoid contamination of the condensate.

According to a further embodiment, a third concentrical cylinder is provided, which further delimits the secondary flow path and forces the cooling fluid to pass close to the inner cylinder wall of the inner cylinder or the outer cylinder wall of the outer cylinder .

The heat is transferred to the secondary fluid through cooling fins contacting the inner cylinder surface of the inner cylinder and/or the outer cylinder surface of the outer cylinder. Alternatively, a second helical space holder may be provided to guide the cooling fluid.

In a further preferred embodiment, the cylinders are in a vertical position and the inner cylinder is dimensioned such as to act as a chimney for the secondary cooling fluid, the latter being at least partially moved due to natural convection. A blower or pump power for the secondary fluid is further reduced, and in case the former breaks, the system nevertheless continues to operate without it, i.e. in a passive way.

### BRIEF DESCRIPTION OF THE DRAWINGS

The subject matter of the invention will be explained in more detail in the following text with reference to preferred exemplary embodiments which are illustrated in the attached drawings, in which:
Fig. 1 schematically shows an oblique front view of a heat exchanger, and
Fig.2 schematically shows a top view of a heat exchanger according to the invention.

The reference symbols used in the drawings, and their meanings, are listed in summary form in the list of reference symbols.

### DETAILED DESCRIPTION OF PREFERRED EMBODIMENTS

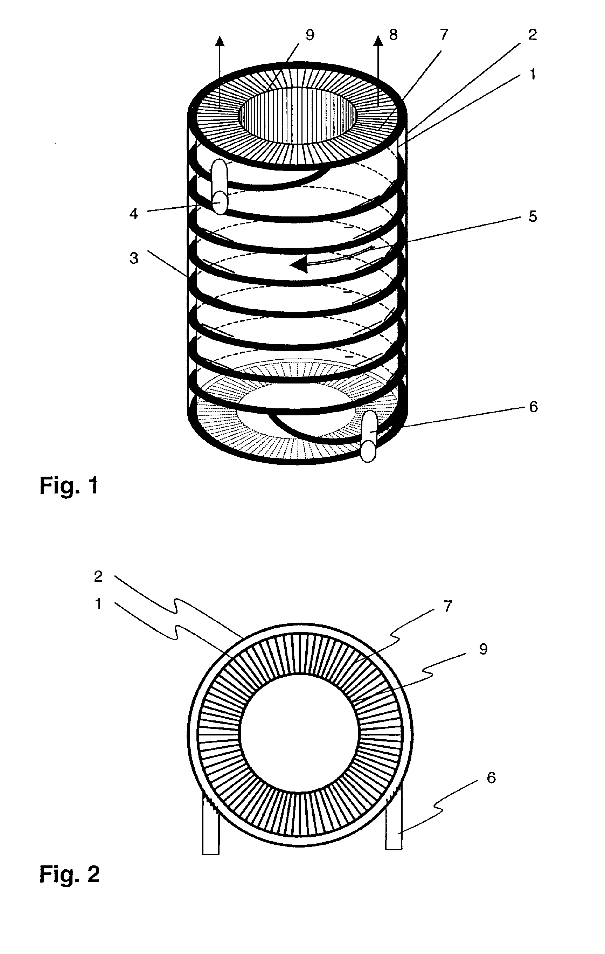

As depicted in fig.1 and fig.2, a double wall cylindrical heat exchanger is composed of an inner cylinder 1 and an outer cylinder 2 arranged concentrically around the former. Between the two cylinders a helically shaped space holder 3 is arranged and defines a helical flow path 5 between an inlet 4 and an outlet 6. The fluid containing the vapour to be condensed enters the heat exchanger at the inlet 4 and follows the helical path 5 between the two cylinder walls, guided by the space holder 3. The vapour (component) condenses by transfer of heat to the secondary side and a two-phase (liquid and gas) flow exits at the outlet 6 of the primary flow path.

A multitude of radial fins 7 on the inside of the open inner cylinder 1 assure a sufficient surface area for the heat transfer to a cooling fluid at the secondary side, e.g. a stream of ambient air 8. The open inner cylinder 1 conducts a stream of cooling fluid preferably in a direction opposite to the direction of the primary fluid, i.e. leaving the inner tube near the inlet 6. If the cylinder axis is vertical with the inlet 6 on top, this leads to a chimney effect, and the secondary fluid is at least partially moved due to natural convection and the blower or pump power at the secondary side is further reduced or a blower can even be omitted completely. One or several fans (not shown in fig.1) may however be used to conduct the ambient air through the fins. They can be placed either at the top or the bottom, drawing or blowing air through the secondary side of the heat exchanger.

The space holder 3 is preferably made of an EPDM-rubber (Ethylenepropyleneterpolymer) or polypropylene hose or of a flexible PTFE-tube (Polytetrafluorethylene) with an arbitrary, not necessarily hollow cross section, tightly wound around the inner cylinder 1. Alternatively, it may be fixed either to the inner surface 22 of the outer tube 2 or to the outer surface 11 of the inner tube 1 by means of soldering. Following this, the second cylinder is either inserted into the outer tube or placed around the inner tube. If the space holder 3 is made of an elastic rubber material, the relative position of the cylinders 1,2 has to be fixed by other mechanical means.

It is to be noted that a certain leakage rate between adjacent turns of the helical flow path is acceptable. In particular, as long as the central axis of the cylinders is vertical, and as long as any remaining gap between the space holder 3 and the walls of the cylinders is close to the bottom of the cross section of the flow path, the condensing water accumulates at the bottom of the turns due to gravity, thereby closing any remaining gap between the space holder and the tubes which would form a short cut flow path for the fluid stream between adjacent turns of the spiral. This is possible because the pressure drop across adjacent turns is only a small fraction of the total pressure drop in the primary flow path.

If the outer cylinder 2 is not supposed to contribute to the heat transfer, it can be made out of a polymer, preferably PP (polypropylene), PVDF (polyvinylidene fluoride), PTFE (Polytetrafluorethylene) or the like. However it can also be a metallic cylinder (e.g. stainless steel) coated on the inner surface 22 with a chemically resistant material, preferably PVDF (Polyvinylidene fluoride), PEEK (Polyaryletheretherketone), E-CTFE (Ethylene-chlortrifluorethylene-Copolymer), PTFE (Polytetrafluorethylene), PFA (Perfluoralkoxy-Copolymer) or a noble metal or the like. The inner cylinder 1 is preferably a metallic cylinder (example stainless steel), coated with a thin, chemically resistant material on the outer surface 11, preferably PVDF (Polyvinylidene fluoride), PEEK (Polyaryletheretherketone), E-CTFE (Ethylene-chlortrifluorethylene-Copolymer), PTFE (Polytetrafluorethylene), PFA (Perfluoralkoxy-Copolymer) or the like. The use of these coated cylinders ensures that no metal is in contact with the condensed water and thus that ionic contamination of the condensed water is minimal. On the other hand, the fins 7 are not in contact with the condensed water and can thus be made of copper or aluminium. They can be prepared as one piece by suitably folding a metallic sheet.

The heat transfer depends on the contact area between the fins and the secondary cooling fluid and hence on the length of the fins measured from the inside 12 of the inner cylinder 1 towards the centre of the cylinder. In order to confine the cooling fluid of the secondary side close to the inner cylinder 1, a third cylinder 9 of a smaller diameter and with a closed top and bottom surface can be provided such that secondary flow path is restricted to the space between the inner cylinder 1 and said third cylinder 9.

The pressure drop in the primary helical flow path is minimal because sharp bends are avoided, but depends on the cross section and on the length of the path. Therefore, both the pressure drop and the heat transfer rate can be adapted to the requirements of the system by changing the dimensions of the helical flow path or the fin geometry, respectively.

If the outer cylinder 2 is metallic, fins might be placed at the outer surface 21 of the outer cylinder 2, either in addition to the fins within the inner cylinder 1 or instead of them. In this case, a third cylinder 9 around these fins placed at the outer cylinder is necessary in order to ensure that the cooling fluid passes along these fins. This situation is not depicted in the fig.1.

It is evident that the geometry of the cylinders does not necessarily imply a circular cylindrical cross section. A cross section of an elliptical shape or involving straight sections connected by suitably rounded corners is found to be working in a satisfactory manner, too. Equally, the cross section may vary along the height of the cylinder, thereby forming a cone for the cooling fluid on the secondary side.

The heat exchanger as described herein is particularly suited in connection with fuel cells, such as direct methanol or hydrogen fuel cells where the condensed water has to be recirculated in the system and where purity demands are high and parasitic blower power should be minimal. But the heat-exchanger provided is also advantageous in other condensation applications where minimisation of pressure drop and high purity of the condensate are required.

The present invention provides a double envelope cylindrical fluid-to-fluid through-the-wall heat exchanger for condensation of a vapour in a fluid stream. Compared to other condensers with identical ratings and made of long metal tubes forming a meander, this condenser is easier to coat with a corrosion resistant coating and shows a smaller flow resistance resulting in a smaller power demand of the air blower. The manufacturing of such a double envelope cylindrical heat exchanger is particularly simple and cost effective.

### LIST OF DESIGNATIOINS

- 1: inner cylinder
- 2: outer cylinder
- 3: space holder
- 4: inlet
- 5: flow path
- 6: outlet
- 7: radial fins
- 8: cooling fluid
- 9: third cylinder

## Claims

1. A heat exchanger of the fluid-to-fluid through-the-wall type for condensation of a vapour in a primary fluid stream, with an inlet (4), a helical primary flow path (5) and an outlet (6) for said primary fluid stream, wherein the helical primary flow path (5) is defined by an outer cylinder surface (11) of an inner cylinder (1), an inner cylinder surface (22) of an outer cylinder (2) arranged concentrically to the inner cylinder (1) and a helical space holder (3) arranged between the inner and the outer cylinder,
**characterised in that** at least one of an inner surface (12) of the inner cylinder (1) or an outer surface (21) of the outer cylinder delimits a secondary flow path for a cooling fluid (8) flowing along said cylinder surface (12,21).

2. The heat exchanger according to claim 1, **characterised in that** the inner cylinder (1) is at least partially open and delimits the secondary flow path for the cooling fluid (8).

3. The heat exchanger according to claim 1 or 2, **characterised in that** at least one of the cylinders (1,2) is made of a first material and **in that** the corresponding cylinder surface (11,22) delimiting the helical primary flow path (5) is coated with a layer consisting of a chemically resistant and preferably non-metallic material.

4. The heat exchanger according to claim 3, **characterised in that** the helical space holder (3) consists of or is coated with a chemically resistant and preferably non-metallic material.

5. The heat exchanger according to claim 1 or 2, **characterised in that** a third cylinder (9) is provided concentrically to the cylinders (1,2) at a radial distance d2 from a cylinder surface (12,21) delimiting the secondary flow path and **in that** the third cylinder (9) further delimits the secondary flow path for the cooling fluid (8).

6. The heat exchanger according to claim 1 or 5, **characterised in that** cooling fins (7) are provided on the cylinder surface (12,21) delimiting the secondary flow path.

7. The heat exchanger according to claim 5, **characterised in that** a second helical space holder is provided between the cylinder surface (12,21) and the third cylinder (9) delimiting the secondary flow path.

8. The heat exchanger according to claim 2, **characterised in that** the cylinder axis is oriented vertically with the inlet (4) for the primary fluid stream on top, and **in that** the inner cylinder (1) is dimensioned such as to sustain a natural convection of the cooling fluid (8).

9. The heat exchanger according to one of the preceding claims, **characterised in that** the cylinder axis is oriented vertically and the space holder (3) conducts the condensing water towards the interface between the space holder (3) and the cylinder surfaces (11,22) delimiting the helical primary flow path (5).

10. A use of a heat exchanger according to any of the preceding claims for condensation of water vapour in a fuel cell system with a closed water cycle.
